# EUROPEAN PATENT SPECIFICATION

(11) **EP 3 089 310 B1**
(45) Date of publication and mention of the grant of the patent: **25.09.2019**
(21) Application number: 14873412.2
(22) Date of filing: 09.12.2014
(51) Int. Cl.: H02J 3/38, H02J 3/46, H02J 7/10, H02J 7/34, H02J 7/35, H02M 7/12, H02M 7/48, H02M 7/797

(54) **POWER CONVERSION SYSTEM, CONVERTER DEVICE, INVERTER DEVICE, AND POWER CONVERSION SYSTEM MANUFACTURING METHOD**
STROMWANDLUNGSSYSTEM, WANDLERVORRICHTUNG, WECHSELRICHTERVORRICHTUNG UND STROMWANDLUNGSSYSTEMHERSTELLUNGSVERFAHREN
SYSTÈME DE CONVERSION D'ALIMENTATION, DISPOSITIF CONVERTISSEUR, DISPOSITIF ONDULEUR, ET MÉTHODE DE FABRICATION DE SYSTÈME DE CONVERSION D'ALIMENTATION

(30) Priority: 24.12.2013 JP 2013265588
(43) Date of publication of application: 02.11.2016
(73) Proprietor: Panasonic Intellectual Property Management Co., Ltd., Osaka-shi, Osaka 570-6207 (JP)
(72) Inventor: TERASAWA, Akira, Osaka 540-6207 (JP); IHIRA, Yasuhisa, Osaka 540-6207 (JP); KAWAGUCHI, Kei, Osaka 540-6207 (JP); MURATA, Yukihiro, Osaka 540-6207 (JP); NISHIKAWA, Keizo, Osaka 540-6207 (JP)
(74) Representative: Appelt, Christian W.
(86) International application number: PCT/JP2014/006148
(87) International publication number: WO 2015/098011

(56) References cited:
- WO-A1-2012/132949
- WO-A1-2013/018507
- WO-A1-2013/121618
- WO-A1-2013/121618
- JP-A- 2000 116 010
- JP-A- 2004 088 900
- JP-A- 2012 100 504
- JP-A- 2012 205 322

## Description

### TECHNICAL FIELD

The present invention relates to a power conversion system that uses created energy and stored energy, a converter apparatus, an inverter device, and a method for manufacturing a power conversion system.

### BACKGROUND ART

To lower carbon dioxide emissions and effectively use energy, efforts have been made to reduce environmental loads. Such efforts include the concept of creating energy (energy creation) at the supplier side in addition to energy conservation, which reduces energy consumption. Specific examples include the use of renewable energy like in photovoltaics and cogeneration systems used in combination with fuel batteries.

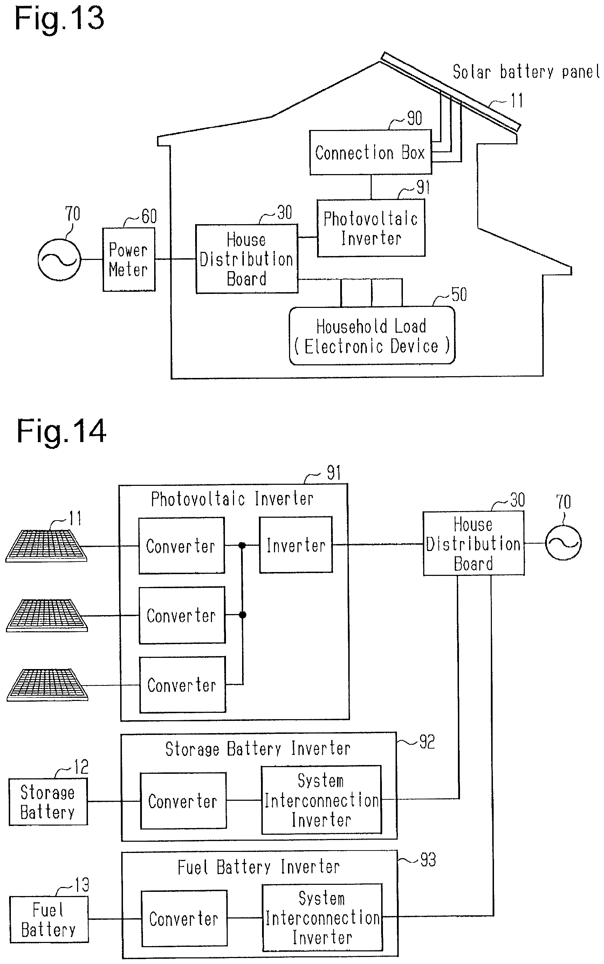

Fig. 13 shows a case in which a house is provided with a solar battery panel 11. In this case, a connection box 90 relays DC power from the solar battery panel 11. The relayed DC power is supplied to a photovoltaic inverter 91. The photovoltaic inverter 91 converts DC power into AC power for use by a household load (power load). The AC power is supplied to a house distribution board 30. Some of the AC power is used by a household load 50, and some of the AC power is supplied through a power meter 60 to a commercial system 70, which is commercial power.

In addition to energy creation, there is a concept for storing energy (energy storage), for example, using a storage battery, so that the energy may be used when necessary.

Fig. 14 shows an example in which created energy and stored energy are used. In this case, solar battery panels 11, a storage battery 12, and a fuel battery 13 are used. The solar battery panels 11, the storage battery 12, and the fuel battery 13 respectively use photovoltaic inverters 91 to 93 to supply AC power. Each of the photovoltaic inverters 91 to 93 includes a converter that adjusts DC voltage and a system interconnection inverter that converts DC power into AC power.

As described above, when household distributed power generation devices are interconnected with the system, systems need to be smoothly interconnected while the safety of each device is ensured. Thus, a verification system has been set by a certain institution (JET: Japanese Electrical Safety and Environment Technology Laboratories). Since the photovoltaic inverters each incorporate an inverter interconnected with the system, each photovoltaic inverter needs to obtain JET verification.

Additionally, when the solar battery and the fuel battery are used as power generation units, a proposed structure includes two converters that correspond to the solar battery and the fuel battery and an inverter that is shared by the solar battery and the fuel battery (e.g., refer to patent document 1). Thus, a photovoltaic DC/DC converter and a fuel battery DC/DC converter generate DC power. The inverter converts the DC power into AC power and supplies the converted AC power to the system.

### PRIOR ART DOCUMENT

### Patent Document

Patent Document 1: Japanese Laid-Open Patent Publication No. 2012-213284

WO 2012/132949 A1 and corresponding EP 2 693 289 A1 disclose a photovoltaic power conversion system with master slave converter structure.

WO 2013/018507 A1 and corresponding EP 2 738 927 A1 disclose a power conversion system with photovoltaic panels and battery connected to a two stage converter structure.

### SUMMARY OF THE INVENTION

### Problems that are to be Solved by the Invention

As shown in Fig. 14, when a photovoltaic inverter is installed for each of the created energy and the stored energy, the installation cost of the photovoltaic inverters increases. Additionally, energy is combined after the created energy and the stored energy are converted into AC from DC. Thus, energy loss occurs in the inverters, which are interconnected with the system. This hinders effective use of energy. Further, each photovoltaic inverter is large in size. Thus, it is difficult to ensure space for setting multiple units in each household, indoors or outdoors. Additionally, each photovoltaic inverter incorporates an inverter interconnected with the system. Thus, each photovoltaic inverter needs to obtain the JET verification.

Moreover, in the technique described in patent document 1, the JET verification needs to be obtained for the entire configuration. This decreases the degree of freedom for realizing the device configuration desired by the user, adding functions, and eliminating functions.

To solve the above problem, it is an object of the present invention to provide a power conversion system that effectively and efficiently uses created energy and stored energy, a converter apparatus, an inverter device, and a method for manufacturing the power conversion system.

### Means for Solving the Problem

The invention is defined by independent claims 1 and 9. The embodiments and/ or examples of the following description which are not covered by the appended claims are considered as not being part of the present invention.

One aspect of the present invention is a power conversion system that includes a DC conversion unit, a single inverter unit, and a control unit. The DC conversion unit converts an output of each of a plurality of distributed power supplies into DC power and outputs DC power to a bus line. The single inverter unit is verified for connection to a commercial system. The inverter unit converts DC power of the bus line into AC power and supplies AC power to a load and a communication system. The control unit stabilizes voltage of the bus line.

Preferably, in the above configuration, the distributed power supplies include an energy storage means capable of storing energy using DC power of a bus line, and the inverter unit includes a bidirectional inverter capable of converting AC power obtained from the commercial system into DC power and supplying DC power to the bus line.

Preferably, in the above configuration, the control unit measures voltage of the bus line and notifies the DC conversion unit and the inverter unit of an instruction to stabilize voltage of the bus line based on voltage of the bus line.

Preferably, in the above configuration, the control unit includes a control unit included in the DC conversion unit and a control unit included in the inverter unit.

Preferably, in the above configuration, the inverter unit includes a plurality of DC input connection terminals.

Preferably, in the above configuration, the DC conversion unit includes a plurality of conversion devices respectively corresponding to the distributed power supplies, and the power conversion system further includes a DC connection unit that combines outputs of the conversion devices.

Preferably, in the above configuration, the inverter unit includes a system output terminal that supplies AC power to a commercial system and a self-contained output terminal that supplies AC power to a household load.

Preferably, in the above configuration, the inverter unit includes a DC output terminal that uses DC power of the bus line to perform DC output.

Preferably, in the above configuration, when detecting that the DC conversion unit and the inverter unit are unable to communicate with each other, the control unit stops operation of the one that is unable to communicate.

One aspect of the present invention is a converter apparatus that includes a converter and a control unit. The converter receives DC power and supplies DC power to a bus line connected to an inverter device. The control unit measures voltage of the bus line. The control unit measures voltage of the bus line and controls the converter to stabilize voltage of the bus line.

One aspect of the present invention is a converter apparatus that includes a converter and a control unit. The converter receives DC power and supplies DC power to a bus line connected to an inverter device. The control unit measures voltage of the bus line. The control unit controls the converter to stabilize voltage of the bus line based on an instruction from an inverter device that has measured voltage of the bus line.

One aspect of the present invention is an inverter device that includes an inverter and a control unit. The inverter receives DC power from a bus line connected to a converter and supplies AC power to a commercial system. The control unit measures voltage of the bus line. The control unit measures voltage of the bus line and provides the converter with an instruction to stabilize voltage of the bus line.

One aspect of the present invention is a method for manufacturing a power conversion system. The method includes the step of obtaining verification for an inverter unit that converts DC power into AC power and supplies AC power to a load and a commercial system. The verification is used for connection to the commercial system. The method includes the step of connecting a DC conversion unit for each distributed power supply to a bus line. The DC conversion unit converts an output of the distributed power supply into DC power. The method includes the step of connecting the single inverter unit to the bus line so that the inverter unit is connected to a commercial system. The method includes the step of connecting a control unit that stabilizes voltage of the bus line.

### EFFECT OF THE INVENTION

The present invention effectively and efficiently uses created energy and stored energy.

### BRIEF DESCRIPTION OF THE DRAWINGS

Fig. 1 is a functional block showing a first embodiment of a power conversion system.
Fig. 2 is a functional block showing a second embodiment of a power conversion system.
Fig. 3 is a functional block showing a third embodiment of a power conversion system.
Fig. 4 is a functional block showing a fourth embodiment of a power conversion system.
Fig. 5 is a functional block showing a fifth embodiment of a power conversion system.
Fig. 6 is a functional block showing a sixth embodiment of a power conversion system.
Fig. 7 is a functional block showing a seventh embodiment of a power conversion system.
Fig. 8 is a functional block showing an eighth embodiment of a power conversion system.
Fig. 9 is a functional block showing a ninth embodiment of a power conversion system.
Fig. 10 is a functional block showing a tenth embodiment of a power conversion system.
Fig. 11 is a functional block showing an eleventh embodiment of a power conversion system.
Fig. 12 is a functional block showing another embodiment of a power conversion system.
Fig. 13 is a view showing a conventional in-house structure.
Fig. 14 is a functional block showing one embodiment of a conventional power conversion system.

### EMBODIMENTS OF THE INVENTION

### First Embodiment

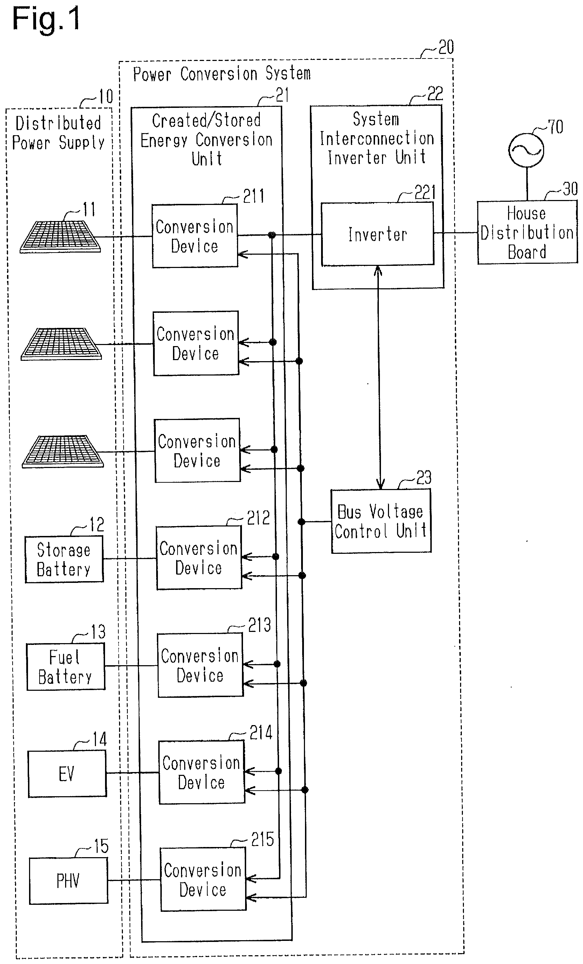

A first embodiment will now be described with reference to Fig. 1.

As shown in Fig. 1, a power conversion system 20 connected to distributed power supplies 10 is used to effectively use created energy and stored energy. The power conversion system 20 is manufactured by connecting a created/stored energy conversion unit 21 and a system interconnection inverter unit 22 with a bus line and connecting a bus voltage control unit 23. The system interconnection inverter unit 22 obtains verification for connection to a commercial system. In the present embodiment, it is assumed that solar battery panels 11, a storage battery 12, a fuel battery 13, an EV 14, and a PHV 15 are used as the distributed power supplies 10.

Each solar battery panel 11 is a power generation device that converts solar energy into DC voltage and functions as an energy creation means. The solar battery panel 11 mainly includes a solar battery panel formed by connecting a plurality of solar battery cells.

The storage battery 12 stores power by charging and may be used as a battery. The storage battery 12 is an energy storage means that is repeatedly usable.

The fuel battery 13 is a power generation device that supplies a fuel gas including hydrogen, for example, a natural gas, and an oxidant gas including oxygen, for example, air, to obtain DC power through a chemical reaction between hydrogen and oxygen. The fuel battery 13 functions as an energy creation means.

The EV 14 is an electric vehicle that is driven by an electric motor. The EV 14 functions as an energy creation means.

The PHV 15 is a plug-in hybrid car that includes a gasoline engine and may be charged when power is directly supplied from a household power supply using a plug (plugging tool). The PHV 15 functions as an energy creation means and an energy storage means by charging the vehicle and also supplying power stored in the vehicle to the house. In this case, the PHV 15 includes an inverter that controls supply of AC power from the vehicle.

The distributed power supplies 10 are connected to the power conversion system 20. The power conversion system 20 includes a converter apparatus and the created/stored energy conversion unit 21, which functions as a DC conversion unit. The created/stored energy conversion unit 21 includes conversion devices 211 to 215 in correspondence with the distributed power supplies 10. The conversion devices 211 to 215 are connected to the system interconnection inverter unit 22, which functions as an inverter device, by the bus line.

The conversion device 211 for the solar battery panels 11 is formed by a DC/DC converter and executes a process for converting outputs (DC) of the solar battery panels 11 into voltage of the bus line (e.g., DC350 V). The conversion device 211 performs an MPPT (maximum power point tracking) operation in accordance with generated power, which is affected by an insolation state of sunlight.

The conversion device 212 for the storage battery 12 is formed by a DC/DC converter. The conversion device 212 converts an output (DC) of the storage battery 12 into voltage of the bus line and supplies the output to the bus line. The conversion device 212 also supplies power to the storage battery 12 from the bus line.

The conversion device 213 for the fuel battery 13 is formed by a DC/DC converter. The conversion device 213 converts an output (DC) of the fuel battery 13 into voltage of the bus line and supplies the output to the bus line.

The conversion device 214 for the EV 14 is formed by a DC/DC converter. The conversion device 214 converts an output (DC) of the EV 14 into voltage of the bus line and supplies the output to the bus line.

The conversion device 215 for the PHV 15 is formed by a DC/DC converter. The conversion device 215 converts an output (AC) of the PHV 15 into DC and supplies the output to the bus line. The conversion device 215 also converts DC power supplied from the bus line into AC and supplies the power to the PHV 15.

Additionally, the conversion devices 212 to 215 perform a charging-discharging operation in which charging is performed when the voltage of the bus line is increased and discharging is performed when the voltage of the bus line is decreased. This regulates the bus line to a constant voltage.

The system interconnection inverter unit 22 is a device verified by JET and includes an inverter 221. The inverter 221 uses a pulse duty ratio to convert DC power into AC power having a voltage and a frequency that are applicable to an interconnection with the commercial system 70 (e.g., AC202 V).

The inverter 221 supplies AC power to the commercial system 70 through a house distribution board 30. The power amount of the AC power is measured by a power meter located between the house distribution board 30 and the commercial system 70. The house distribution board 30 is connected to the household load and supplies AC power to the household load.

The power conversion system 20 includes a bus voltage control unit 23 that controls the voltage of the bus line. The bus voltage control unit 23 measures the voltage of the bus line. The bus voltage control unit 23 controls operation of each of the conversion devices 211 to 215 by notifying the conversion devices 211 to 215 of an instruction to stabilize the voltage of the bus line at a predetermined value. Additionally, when communication cannot be performed, the bus voltage control unit 23 stops the operation of the conversion devices 211 to 215 and the system interconnection inverter unit 22 that cannot establish communication.

The first embodiment has the advantages described below.
(1) In the first embodiment, the multiple conversion devices 211 to 215 are connected to the single system interconnection inverter unit 22. This allows the inverter to efficiently convert generated or stored DC power into AC. Additionally, the conversion devices 211 to 215 share the system interconnection inverter unit 22. This reduces the space for setting the inverter and limits power loss. Further, the created/stored energy conversion unit 21 and the system interconnection inverter unit 22 have separate structures. Thus, the JET verification needed for the system connection is limited to the system interconnection inverter unit 22. This increases the degree of freedom for combining the distributed power supplies 10 and efficiently actualizes a creation-storage cooperative operation that uses created energy and stored energy.
(2) In the first embodiment, when communication cannot be performed, the bus voltage control unit 23 stops the operation of the conversion devices 211 to 215 and the system interconnection inverter unit 22 that cannot establish the communication. This copes with a situation in which an abnormality occurs in a device. For example, an occurrence of overvoltage or overcurrent in the bus line may be limited. This prevents breakage and breakdown of the mounted components.

### Second Embodiment

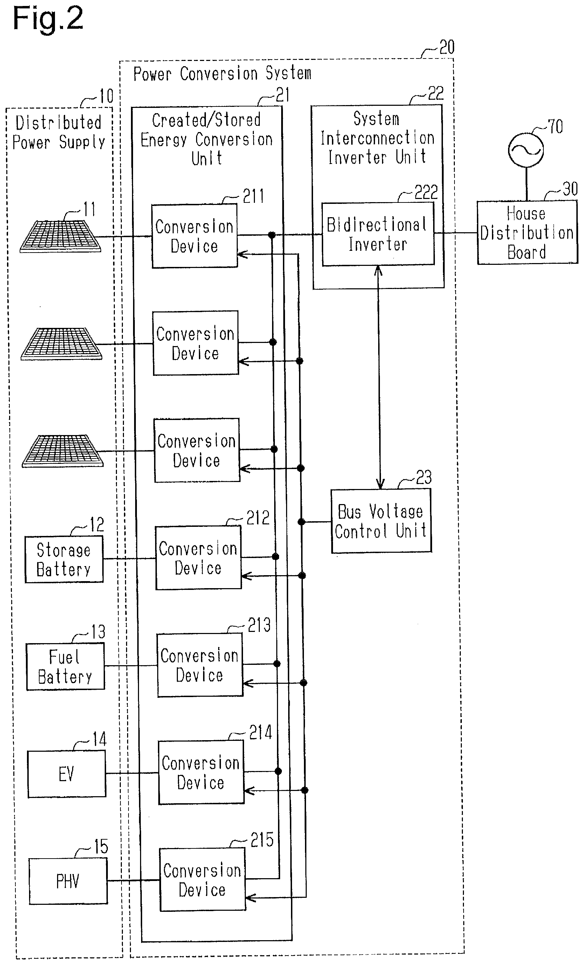

A second embodiment will now be described with reference to Fig. 2. In the first embodiment, power is supplied to the commercial system 70 from the distributed power supplies 10. In the second embodiment, the system interconnection inverter unit 22 supplies and obtains power to and from the commercial system 70. Same configurations will not be repeatedly described in detail.

As shown in Fig. 2, the system interconnection inverter unit 22 includes a bidirectional inverter 222.

When a distributed power supply 10 for storing energy has insufficient energy storage, the distributed power supply 10 obtains and stores power from the commercial system 70.

More specifically, the bus voltage control unit 23 detects an energy storage state of an energy storage device included in the distributed power supply 10. In the second embodiment, the energy storage states of the storage battery 12 and the PHV 15 are detected. When the energy storage state does not reach a predetermined storage reference, the bus voltage control unit 23 instructs the bidirectional inverter 222 to supply power from the commercial system 70. In this case, the bidirectional inverter 222 converts commercial AC power into DC power and supplies the power to the bus line. The energy storage is performed on the storage battery 12 and the PHV 15 having the energy storage state that does not reach the predetermined storage reference. When the energy storage state reaches the predetermined storage reference, the bus voltage control unit 23 stops the power supply from the commercial system 70.

The second embodiment has the advantage described below.

(3) In the second embodiment, the system interconnection inverter unit 22 includes the bidirectional inverter 222. This allows for the power supply to the energy storage means (e.g., storage battery 12 and PHV 15) from the commercial system 70 when necessary. In one example, midnight low cost power may be used during the daytime. In another example, surplus power generated from sunlight may be stored in the storage battery. This actualizes an appropriate creation-storage cooperative operation by performing the energy storage taking into consideration a situation when power needs to be supplied from the energy storage devices.

### Third Embodiment

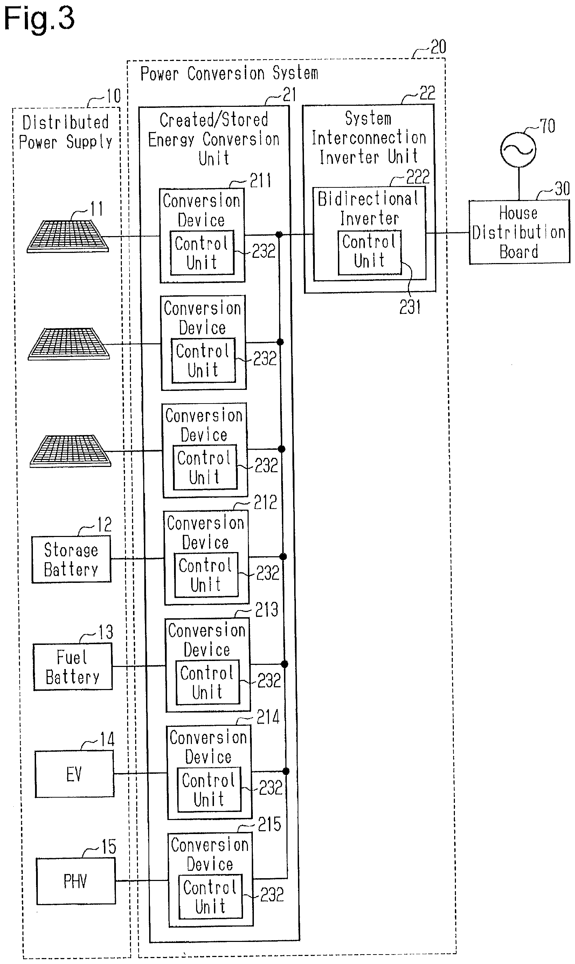

A third embodiment will now be described with reference to Fig. 3. In the third embodiment, the bus voltage control unit 23 controls the voltage of the bus line. In the third embodiment, the power conversion system 20 includes an inverter and converters each of which includes an independent control unit. Same configurations will not be repeatedly described in detail.

As shown in Fig. 3, the bidirectional inverter 222 of the system interconnection inverter unit 22 includes a control unit 231 that detects the voltage of the bus line and performs inverter control. The conversion device 211 includes control units 232 that perform power conversion in accordance with the power generation state of the solar battery panels 11. The conversion devices 212 to 215 each include a control unit 232 that measures the voltage of the bus line and performs power supply or power storage to obtain a predetermined voltage. For example, when the voltage of the bus line is low, power is supplied from the distributed power supplies 10 to increase the voltage of the bus line. When the voltage of the bus line is high, power is supplied to the distributed power supplies 10 to decrease the voltage of the bus line.

The third embodiment has the advantage described below.

(4) In the third embodiment, the bidirectional inverter 222 and the conversion devices 211 to 215 respectively include the control units 231, 232. This allows each device to independently control the voltage of the bus line without using a bus voltage control unit that controls the combination of the devices. In this case, a distributed power supply 10 may be added by connecting a conversion device including the control unit 232 to the system interconnection inverter unit 22. This ensures the degree of freedom for expanding the system.

### Fourth Embodiment

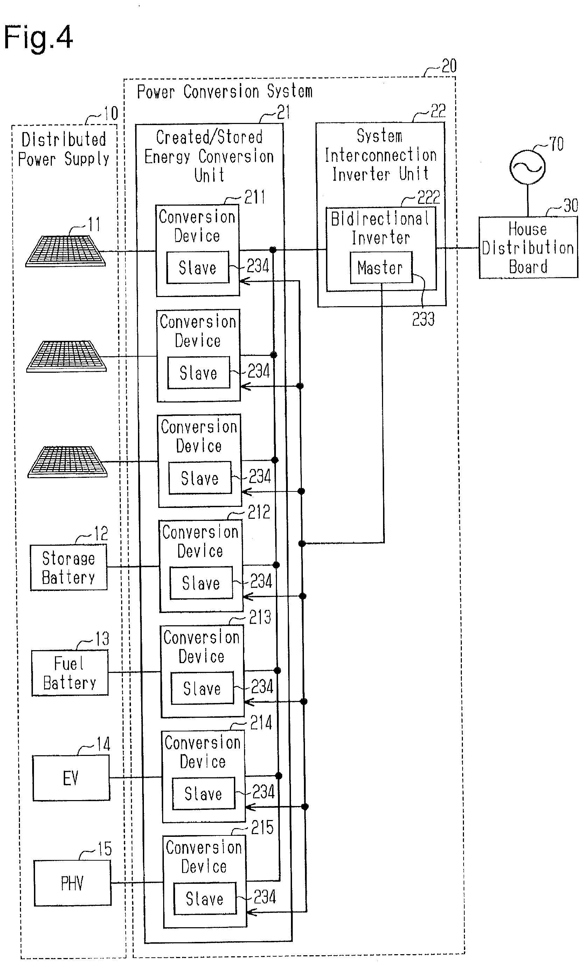

A fourth embodiment will now be described with reference to Fig. 4. In the third embodiment, the power conversion system 20 includes the inverter and the converters respectively including the independent control units 231, 232. In the fourth embodiment, the power conversion system 20 includes an inverter and converters that include control units in which a master-slave relationship is set. Same configurations will not be repeatedly described in detail.

As shown in Fig. 4, in the system interconnection inverter unit 22, the bidirectional inverter 222 includes a master control unit 233. Each of the conversion devices 211 to 215 includes a slave control unit 234. The master control unit 233 communicates with each slave control unit 234.

The master control unit 233 detects the voltage of the bus line and performs inverter control. Additionally, the master control unit 233 instructs the slave control unit 234 of each of the conversion devices 211 to 215 to perform operation control. For example, when the voltage of the bus line is low, the master control unit 233 instructs to supply power from a distributed power supply 10 that is an energy storage means so that the voltage of the bus line is increased. When the voltage of the bus line is high, the master control unit 233 instructs to supply power to the distributed power supply 10 that is an energy storage means so that the voltage of the bus line is decreased. The slave control units 234 controls the operation of the conversion devices 211 to 215 based on the instruction from the master control unit 233.

The fourth embodiment has the advantage described below.

(5) In the fourth embodiment, the power conversion system 20 includes the system interconnection inverter unit 22 including the master control unit 233, and the conversion devices 211 to 215 corresponding to the distributed power supplies 10 include the slave control units 234. Thus, the master control unit 233 cooperates with the multiple slave control units 234 to control the power conversion system 20. In this case, distributed power supplies 10 are added by connecting conversion devices including the slave control units 234 to the system interconnection inverter unit 22. This ensures the degree of freedom for expanding the system.

### Fifth Embodiment

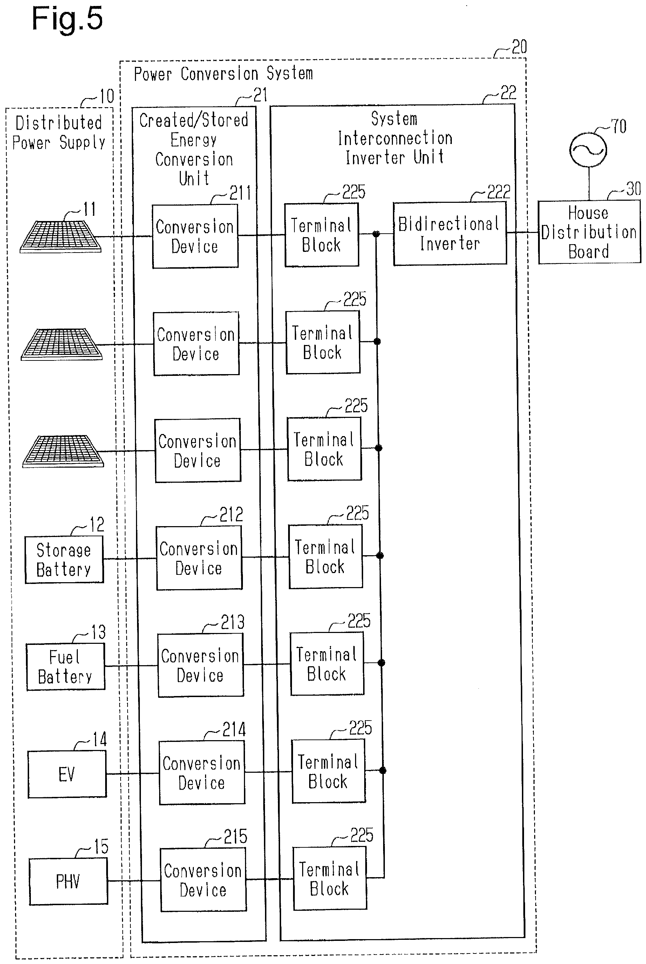

A fifth embodiment will now be described with reference to Fig. 5. In the first to fourth embodiments, the created/stored energy conversion unit 21 is configured to integrate the conversion devices 211 to 215. In the fifth embodiment, the created/stored energy conversion unit 21 includes the conversion devices 211 to 215 that are separately connected to the system interconnection inverter unit 22. Same configurations will not be repeatedly described in detail.

As shown in Fig. 5, the system interconnection inverter unit 22 includes terminal blocks 225 that include a plurality of DC input connection terminals and function as connection interfaces to the conversion devices 211 to 215. Each terminal block 225 is connected to the bidirectional inverter 222. When power is not supplied from the commercial system 70, a unidirectional inverter 221 may be used instead of the bidirectional inverter 222.

The conversion devices 211 to 215, which are connected to the distributed power supplies 10, are separately connected to the corresponding terminal blocks 225. In this case, the inverter and the conversion devices may be controlled through the bus voltage control process of the first to fourth embodiments. The inverter and the conversion devices are separately operated through the bus voltage control process to maintain a constant voltage of the bus line.

The fifth embodiment has the advantage described below.

(6) In the fifth embodiment, the system interconnection inverter unit 22 includes the terminal blocks 225 corresponding to the conversion devices 211 to 215. This allows the conversion devices 211 to 215 to be arranged in accordance with the state (installed number) of the distributed power supplies 10 located in each household and connected to the system interconnection inverter unit 22. This facilitates customization during the installation and addition and elimination after the installation.

### Sixth Embodiment

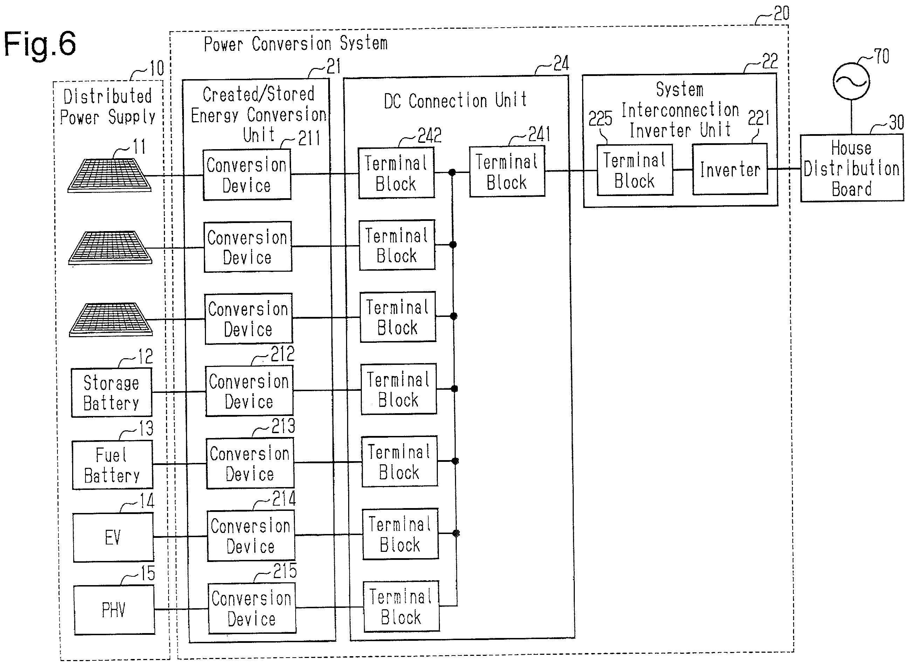

A sixth embodiment will now be described with reference to Fig. 6. In the fifth embodiment, the system interconnection inverter unit 22 includes the multiple terminal blocks 225. In the sixth embodiment, the bus line is configured to combine DC inputs and outputs to and from the system interconnection inverter unit 22 into one system. Same configurations will not be repeatedly described in detail.

As shown in Fig. 6, a DC connection unit 24, which serves as a DC connection unit, is located between the created/stored energy conversion unit 21 and the system interconnection inverter unit 22. The DC connection unit 24 includes a terminal block 241 for connecting the system interconnection inverter unit 22 and a plurality of terminal blocks 242 connected to the terminal block 241.

Each terminal block 242 is connected to one of the conversion devices 211 to 215, which are connected to the distributed power supplies 10. Also, in this case, the inverter and the conversion devices may be controlled through the bus voltage control process of the first to fourth embodiments.

The sixth embodiment has the advantage described below.

(7) In the sixth embodiment, the DC connection unit 24 is located between the system interconnection inverter unit 22 and the conversion devices 211 to 215. Thus, even when the system interconnection inverter unit 22 has few input terminals, the multiple conversion devices 211 to 215 may be connected and the distributed power supplies 10 are effectively used.

### Seventh Embodiment

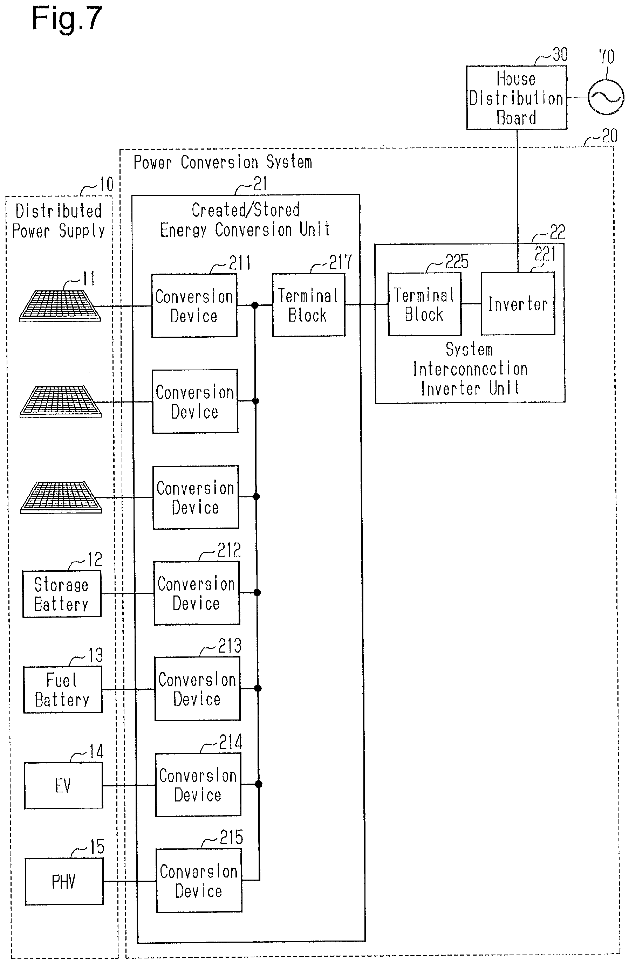

A seventh embodiment will now be described with reference to Fig. 7. In the sixth embodiment, the created/stored energy conversion unit 21 and the system interconnection inverter unit 22 are connected by the DC connection unit 24. In the seventh embodiment, the created/stored energy conversion unit 21 includes a terminal block that combines DC outputs into one system. Same configurations will not be repeatedly described in detail.

As shown in Fig. 7, the created/stored energy conversion unit 21 includes a terminal block 217 that is connected to the conversion devices 211 to 215. The system interconnection inverter unit 22 includes a terminal block 225 that is connected to the terminal block 217. Also, in this case, the inverter and the conversion devices may be controlled through the bus voltage control process of the first to fourth embodiments.

The seventh embodiment has the advantage described below.

(8) In the seventh embodiment, the created/stored energy conversion unit 21 includes the terminal block 217 connected to the multiple conversion devices 211 to 215. Thus, when the system interconnection inverter unit 22 is connected to the created/stored energy conversion unit 21, the multiple conversion devices may be connected and the distributed power supplies 10 are effectively used.

### Eighth Embodiment

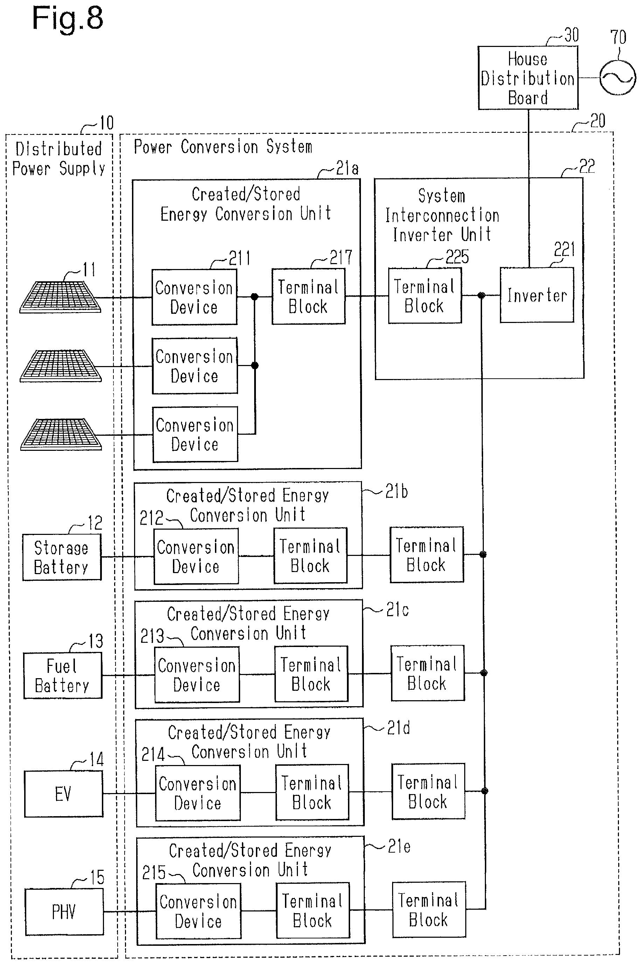

An eighth embodiment will now be described with reference to Fig. 8. In the seventh embodiment, the created/stored energy conversion unit 21 includes the terminal block 217 that combines DC outputs into one system. In the eighth embodiment, the created/stored energy conversion unit 21 combines a plurality of common distributed power supplies into one system. Same configurations will not be repeatedly described in detail.

As shown in Fig. 8, a created/stored energy conversion unit 21a for solar battery panels includes conversion devices 211 for each solar battery panel 11. The created/stored energy conversion unit 21a combines multiple inputs of common distributed power into one system and supplies the combined common distributed power from the terminal block. In the same manner, created/stored energy conversion units 21b to 21e are arranged for the storage battery 12, the fuel battery 13, the EV 14, and the PHV 15, respectively. The created/stored energy conversion units 21b to 21e include the conversion devices 212 to 215 corresponding to the respective distributed power supplies 10. The system interconnection inverter unit 22 includes a plurality of terminal blocks 225. The terminal blocks 225 are respectively connected to the created/stored energy conversion units 21a to 21e. Also, in this case, the inverter and the conversion devices may be controlled through the bus voltage control process of the first to fourth embodiments.

The eighth embodiment has the advantage described below.

(9) In the eighth embodiment, the created/stored energy conversion unit 21a includes the multiple conversion devices 211 respectively connected to a plurality of common distributed power supplies 10. This allows the created/stored energy conversion unit 21a to connect the multiple common distributed power supplies to the system interconnection inverter unit 22.

### Ninth Embodiment

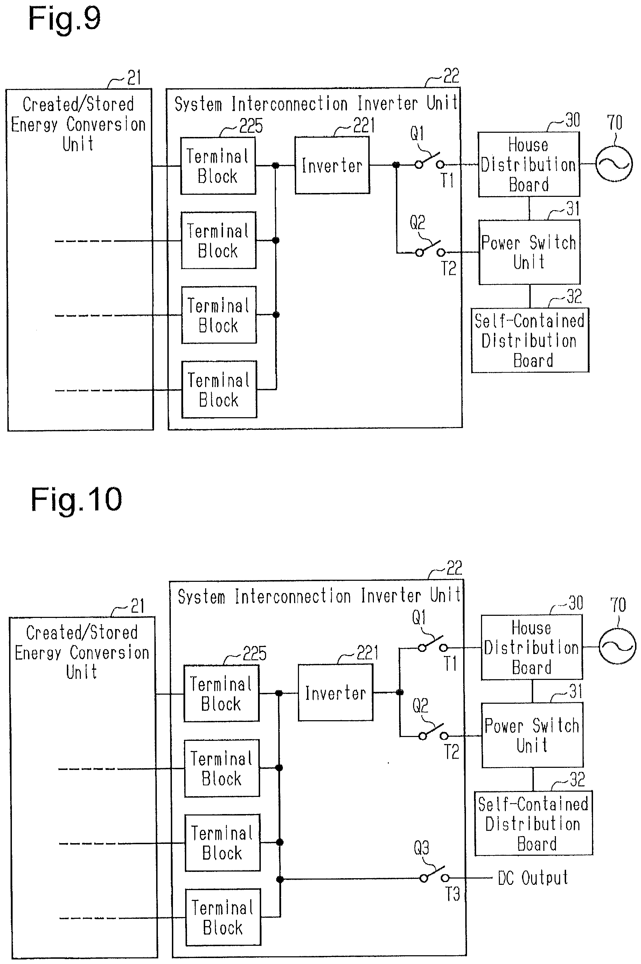

A ninth embodiment will now be described with reference to Fig. 9. In the eighth embodiment, the system interconnection inverter unit 22 is connected to the commercial system 70 by the house distribution board 30. In the ninth embodiment, a self-contained distribution board 32 is arranged in addition to the house distribution board 30. Same configurations will not be repeatedly described in detail.

As shown in Fig. 9, the system interconnection inverter unit 22 includes two system terminals, namely, T1, T2. The terminals T1, T2 each include a switch portion Q1 or a switch portion Q2 that is connected to the inverter 221. The output of the terminal T1 is connected to the commercial system 70 by the house distribution board 30. The terminal T2 functions as a self-contained output terminal and is connected to the self-contained distribution board 32 by a power switch unit 31. The power switch unit 31 is also connected to the house distribution board 30. When detecting a power outage of the commercial system 70, the power switch unit 31 switches the system output to the self-contained output. When detecting a recovery of the commercial system 70, the power switch unit 31 switches the self-contained output to the system output.

The ninth embodiment has the advantage described below.

(10) In the ninth embodiment, the system interconnection inverter unit 22 includes two system outputs. One system of the system interconnection inverter unit 22 is connected to the self-contained distribution board 32 by the power switch unit 31. This allows for power supply to the household load from the distributed power supplies 10 during a power outage of the commercial system 70.

### Tenth Embodiment

A tenth embodiment will now be described with reference to Fig. 10. In the ninth embodiment, the self-contained distribution board 32 is arranged in addition to the house distribution board 30. In the tenth embodiment, the system interconnection inverter unit is formed by a DC output portion. Same configurations will not be repeatedly in detail.

As shown in Fig. 10, the bus line includes a terminal T3 connected by a switch portion Q3, and DC output is performed. Additionally, when a step-down converter is connected to the switch portion Q3, voltage of the step-down converter may be supplied from the terminal T3.

The tenth embodiment has the advantage described below.

(11) In the tenth embodiment, the bus line includes the terminal T3 connected by the switch portion Q3. Thus, DC power of the bus line may be supplied to an external device and used by a DC device.

### Eleventh Embodiment

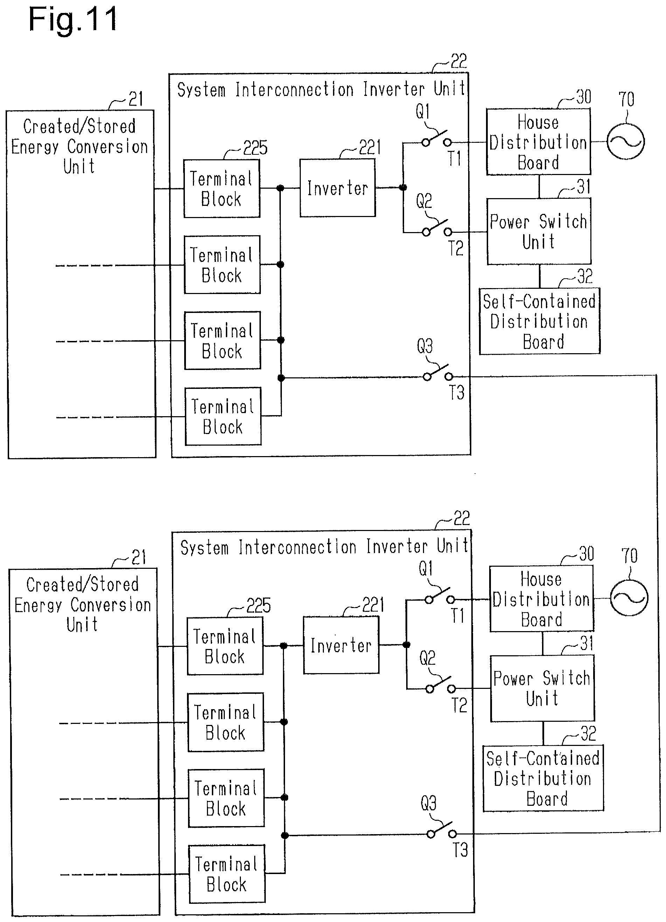

An eleventh embodiment will now be described with reference to Fig. 11. In the tenth embodiment, the system interconnection inverter unit 22 includes the DC output portion. In the eleventh embodiment, a plurality of power conversion systems 20 is linked. Same configurations will not be repeatedly described in detail.

As shown in Fig. 11, the terminals T3 of the system interconnection inverter units 22 of the power conversion systems 20 are connected to each other. In this case, each power conversion system 20 includes a control unit that provides a signal indicating state information of the power conversion system 20. The signal may be output, for example, through power line communication using the bus line. The signal output may be performed, for example, through power line communication using the bus line. The control unit of each system interconnection inverter unit 22 controls the voltage of the bus line based on the state information obtained from another power conversion system 20. When the distributed power supplies 10 for storing energy have been fully charged into one system, the energy storage means (e.g., storage battery 12 and PHV 15) connected to another power conversion system 20 are charged. Additionally, when the stored energy of the distributed power supplies 10 is insufficient, power is obtained from the energy storage means (e.g., storage battery 12 and PHV 15) connected to another power conversion system 20.

The eleventh embodiment has the advantage described below.

(12) In the eleventh embodiment, the multiple power conversion systems 20 are connected together by the terminals T3. Thus, the power conversion systems 20 cooperate with one another using DC. Such cooperation ensures redundancy of created energy and stored energy.

The first to eleventh embodiments may be modified as follows.

In each embodiment, the created/stored energy conversion unit 21 and the system interconnection inverter unit 22 communicate with each other through wire communication using a communication line or power line communication. However, the communication means is not limited to wire communication and may be wireless communication.

In each embodiment, the power conversion system 20 is connected to the commercial system 70 by the house distribution board 30. The power conversion system 20 supplies and obtains power to and from the commercial system 70. The power conversion system 20 may correspond to demand response. In demand response, a power consumption pattern is changed to limit power used by a consumer based on the power price and the system reliability.

More specifically, the system interconnection inverter unit 22 stores information related to a power consumption amount. The system interconnection inverter unit 22 controls use of the distribution power supplies to reduce the electricity price based on the power consumption amount and the electricity price system. For example, if the electricity price rises when the consumption amount of power supplied from the commercial system 70 increases, the household load uses energy that is created and stored by the distributed power supplies. When the electricity price is low, priority is given to energy storage in the distributed power supplies 10 with power from the commercial system 70.

In each embodiment, the created/stored energy conversion unit 21 and the system interconnection inverter unit 22 are connected directly or by the DC connection unit 24. A power interruption means may be located between the created/stored energy conversion unit 21 and the system interconnection inverter unit 22. The configuration of the eighth embodiment including a power interruption means will now be described.

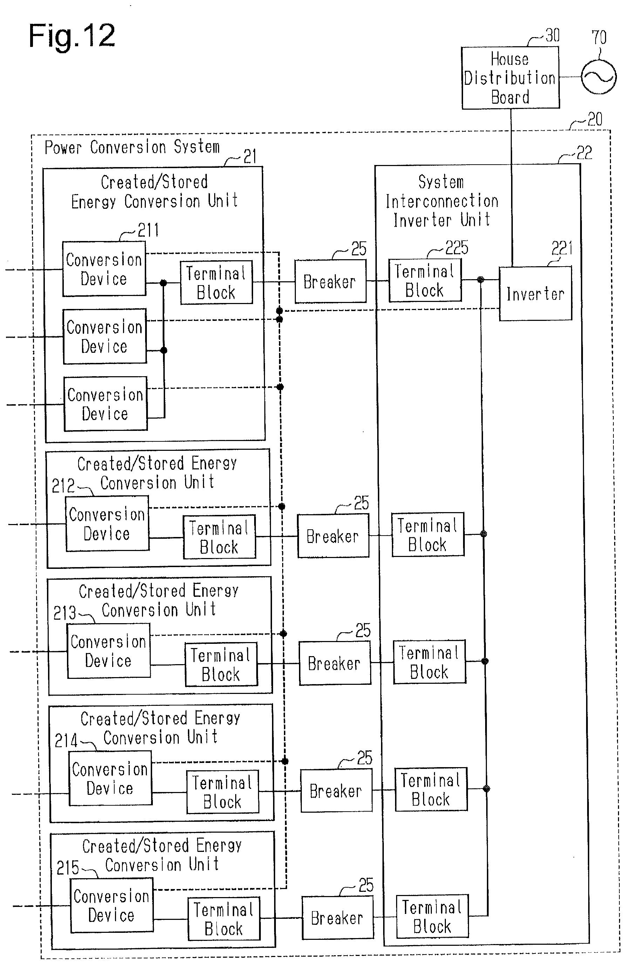

As shown in Fig. 12, breakers 25 are located between each created/stored energy conversion unit 21 and the corresponding terminal block 225 of the system interconnection inverter unit 22. Thus, one of the conversion devices 211 to 215 having a voltage abnormality may be separated from the system interconnection inverter unit 22.

## Claims

1. A power conversion system, comprising:
a DC conversion unit (21) that includes a plurality of conversion devices (211-215), wherein each of the conversion devices (211-215) converts an output of a corresponding one of a plurality of distributed power supplies (10) into DC power and outputs DC power to a bus line; and
a single inverter unit (22) that is verified for connection to a commercial system (70), wherein the inverter unit (22) includes a bidirectional inverter (222) that converts DC power of the bus line into AC power and supplies AC power to at least one of a load and the commercial system (70),
wherein the inverter unit (22) includes a master control unit (233) that is configured to control the bidirectional inverter (222), wherein the master control unit (233) is configured to detect the voltage of the bus line;
**characterized in that**
each of the conversion devices (211-215) includes a slave control unit (234) that is configured to communicate with the master control unit (233),
**in that**, when the voltage of the bus line is low, the master control unit (233) is configured to instruct the plurality of slave control units (234) to supply power from a distributed power supply (10) that is an energy storage means (12-15) so that the voltage of the bus line is increased, and
**in that**, when the voltage of the bus line is high, the master control unit (233) is configured to instruct the plurality of slave control units (234) to supply power to a distributed power supply (10) that is an energy storage means (12-15) so that the voltage of the bus line is decreased.

2. The power conversion system according to claim 1, wherein
the energy storage means is capable of storing energy using DC power of the bus line, and
the inverter unit (22) includes the bidirectional inverter (222) capable of converting AC power obtained from the commercial system (70) into DC power and supplying DC power to the bus line.

3. The power conversion system according to claim 1 or 2, wherein the plurality of distributed power supplies (10) include the energy storage means (12-15) and an energy creation means (11).

4. The power conversion system according to any one of claims 1 to 3, wherein the inverter unit (22) includes a plurality of DC input connection terminals.

5. The power conversion system according to any one of claims 1 to 3, wherein the power conversion system further comprises a DC connection unit that combines outputs of the conversion devices (211-215).

6. The power conversion system according to any one of claims 1 to 5, wherein the inverter unit (22) includes a system output terminal that supplies AC power to a commercial system (70) and a self-contained output terminal that supplies AC power to a household load.

7. The power conversion system according to any one of claims 1 to 6, wherein the inverter unit (22) includes a DC output terminal that uses DC power of the bus line to perform DC output.

8. The power conversion system according to claim 1, wherein each of the conversion devices (211-215) and the bidirectional inverter (222) is configured to independently control the voltage of the bus line without using a bus voltage control unit that controls the combination of the conversion devices (211-215) and the bidirectional inverter(222).

9. A method for manufacturing a power conversion system, the method comprising the steps of:
obtaining verification for an inverter unit (22) that converts DC power into AC power and supplies AC power to a load and a commercial system (70), wherein the verification is used for connection to the commercial system (70);
connecting a DC conversion unit (21) for a plurality of distributed power supplies (10) to a bus line, wherein the DC conversion unit (21) includes a plurality of conversion devices (211-215), and wherein each of the conversion devices (211-215) converts an output of a corresponding one of the plurality of distributed power supplies (10) into DC power; and
connecting the single inverter unit (22) to the bus line so that the inverter unit (22) is connected to the commercial system (70),
wherein the inverter unit (22) includes a bidirectional inverter (222) that converts DC power of the bus line into AC power and supplies AC power to at least one of a load and the commercial system (70),
wherein the inverter unit (22) includes a master control unit (233) that is configured to control the bidirectional inverter (222),
wherein each of the conversion devices (211-215) includes a slave control unit (234) that is configured to communicate with the master control unit (233),
wherein the master control unit (233) is configured to detect the voltage of the bus line,
wherein, when the voltage of the bus line is low, the master control unit (233) is configured to instruct the plurality of slave control units (234) to supply power from a distributed power supply (10) that is an energy storage means (12-15) so that the voltage of the bus line is increased, and
wherein, when the voltage of the bus line is high, the master control unit (233) is configured to instruct the plurality of slave control units (234) to supply power to a distributed power supply (10) that is an energy storage means (12-15) so that the voltage of the bus line is decreased.

## Patentansprüche

1. Stromwandlungssystem, umfassend:
eine Gleichstromwandlungseinheit (21), die eine Vielzahl an Wandlungsvorrichtungen (211-215) enthält, wobei jede der Wandlungsvorrichtungen (211-215) einen Ausgang einer entsprechenden einer Vielzahl verteilter Stromversorgungen (10) in Gleichstrom umwandelt und Gleichstrom an eine Busleitung ausgibt; und
eine einzelne Wechselrichtereinheit (22), die zur Verbindung mit einem gewerblichen System (70) verifiziert ist, wobei die Wechselrichtereinheit (22) einen bidirektionalen Wechselrichter (222) enthält, der Gleichstrom der Busleitung in Wechselstrom umwandelt und mindestens eines von einem Stromabnehmer und dem gewerblichen System (70) mit Wechselstrom versorgt,
wobei die Wechselrichtereinheit (22) eine Master-Steuereinheit (233) enthält, die konfiguriert ist, den bidirektionalen Wechselrichter (222) zu steuern, wobei die Master-Steuereinheit (233) konfiguriert ist, die Spannung der Busleitung zu erfassen;
**dadurch gekennzeichnet, dass**
jede der Wandlungsvorrichtungen (211-215) eine Slave-Steuereinheit (234) enthält, die konfiguriert ist, mit der Master-Steuereinheit (233) zu kommunizieren,
dadurch, dass, wenn die Spannung der Busleitung niedrig ist, die Master-Steuereinheit (233) konfiguriert ist, die Vielzahl an Slave-Steuereinheiten (234) anzuweisen, eine verteilte Stromversorgung (10), die ein Energiespeichermittel (12-15) ist, mit Strom zu versorgen, sodass die Spannung der Busleitung erhöht wird, und
dadurch, dass, wenn die Spannung der Busleitung hoch ist, die Master-Steuereinheit (233) konfiguriert ist, die Vielzahl an Slave-Steuereinheiten (234) anzuweisen, eine verteilte Stromversorgung (10), die ein Energiespeichermittel (12-15) ist, mit Strom zu versorgen, sodass die Spannung der Busleitung verringert wird.

2. Stromwandlungssystem nach Anspruch 1, wobei
das Energiespeichermittel fähig ist, Energie unter Verwendung von Gleichstrom der Busleitung zu speichern, und
die Wechselrichtereinheit (22) den bidirektionalen Wechselrichter (222) enthält, der fähig ist, Wechselstrom, der vom gewerblichen System (70) erhalten wird, in Gleichstrom umzuwandeln und die Busleitung mit Gleichstrom zu versorgen.

3. Stromwandlungssystem nach Anspruch 1 oder 2, wobei die Vielzahl verteilter Stromversorgungen (10) das Energiespeichermittel (12-15) und ein Energieerzeugungsmittel (11) enthält.

4. Stromwandlungssystem nach einem der Ansprüche 1 bis 3, wobei die Wechselrichtereinheit (22) eine Vielzahl von Gleichstromeingangsverbindungsanschlüssen enthält.

5. Stromwandlungssystem nach einem der Ansprüche 1 bis 3, wobei das Stromwandlungssystem weiter eine Gleichstromverbindungseinheit umfasst, die Ausgänge der Wandlungsvorrichtungen (211-215) kombiniert.

6. Stromwandlungssystem nach einem der Ansprüche 1 bis 5, wobei die Wechselrichtereinheit (22) einen Systemausgangsanschluss enthält, der ein gewerbliches System (70) mit Wechselstrom versorgt, und einen abgeschlossenen Ausgangsanschluss, der einen Haushaltsstromabnehmer mit Wechselstrom versorgt.

7. Stromwandlungssystem nach einem der Ansprüche 1 bis 6, wobei die Wechselrichtereinheit (22) einen Gleichstromausgangsanschluss enthält, der Gleichstrom der Busleitung verwendet, um Gleichstromausgang durchzuführen.

8. Stromwandlungssystem nach Anspruch 1, wobei jede der Wandlungsvorrichtungen (211-215) und der bidirektionale Wechselrichter (222) konfiguriert sind, die Spannung der Busleitung unabhängig zu steuern, ohne eine Busspannungssteuereinheit zu verwenden, die die Kombination der Wandlungsvorrichtungen (211-215) und des bidirektionalen Wechselrichters (222) steuert.

9. Verfahren zur Herstellung eines Stromwandlungssystems, das Verfahren umfassend die Schritte zum:
Erhalten einer Verifizierung für eine Wechselrichtereinheit (22), die Gleichstrom in Wechselstrom umwandelt und einen Stromabnehmer und ein gewerbliches System (70) mit Wechselstrom versorgt, wobei die Verifizierung zur Verbindung mit dem gewerblichen System (70) verwendet wird;
Verbinden einer Gleichstromwandlungseinheit (21) für eine Vielzahl verteilter Stromversorgungen (10) mit einer Busleitung, wobei die Gleichstromwandlungseinheit (21) eine Vielzahl an Wandlungsvorrichtungen (211-215) enthält, und wobei jede der Wandlungsvorrichtungen (211-215) einen Ausgang einer entsprechenden der Vielzahl an verteilten Stromversorgungen (10) in Gleichstrom umwandelt; und
Verbinden der einzelnen Wechselrichtereinheit (22) mit der Busleitung, sodass die Wechselrichtereinheit (22) mit dem gewerblichen System (70) verbunden ist,
wobei die Wechselrichtereinheit (22) einen bidirektionalen Wechselrichter (222) enthält, der Gleichstrom der Busleitung in Wechselstrom umwandelt und mindestens eines von einem Stromabnehmer und dem gewerblichen System (70) mit Wechselstrom versorgt,
wobei die Wechselrichtereinheit (22) eine Master-Steuereinheit (233) enthält, die konfiguriert ist, den bidirektionalen Wechselrichter (222) zu steuern,
wobei jede der Wandlungsvorrichtungen (211-215) eine Slave-Steuereinheit (234) enthält, die konfiguriert ist, mit der Master-Steuereinheit (233) zu kommunizieren,
wobei die Master-Steuereinheit (233) konfiguriert ist, die Spannung der Busleitung zu erfassen,
wobei, wenn die Spannung der Busleitung niedrig ist, die Master-Steuereinheit (233) konfiguriert ist, die Vielzahl an Slave-Steuereinheiten (234) anzuweisen, Strom von einer verteilten Stromversorgung (10) zuzuleiten, die ein Energiespeichermittel (12-15) ist, sodass die Spannung der Busleitung erhöht wird, und
wobei, wenn die Spannung der Busleitung hoch ist, die Master-Steuereinheit (233) konfiguriert ist, die Vielzahl an Slave-Steuereinheiten (234) anzuweisen, eine verteilte Stromversorgung (10), die ein Energiespeichermittel (12-15) ist, mit Strom zu versorgen, sodass die Spannung der Busleitung verringert wird.

## Revendications

1. Système de conversion de puissance, comprenant :
une unité de conversion en courant continu (21) qui inclut une pluralité de dispositifs de conversion (211-215), dans lequel chacun des dispositifs de conversion (211-215) convertit une sortie d'une alimentation électrique correspondante parmi une pluralité d'alimentations électriques réparties (10) en une puissance en courant continu et fournit en sortie une puissance en courant continu à une ligne de bus ; et
une unité d'onduleur unique (22) qui est vérifiée à des fins de connexion à un système commercial (70), dans lequel l'unité d'onduleur (22) inclut un onduleur bidirectionnel (222) qui convertit la puissance en courant continu de la ligne de bus en une puissance en courant alternatif, et fournit la puissance en courant alternatif à au moins l'un des éléments parmi une charge et le système commercial (70) ;
dans lequel l'unité d'onduleur (22) inclut une unité de commande maître (233) qui est configurée de manière à commander l'onduleur bidirectionnel (222), dans lequel l'unité de commande maître (233) est configurée de manière à détecter la tension de la ligne de bus ;
**caractérisé en ce que**
chacun des dispositifs de conversion (211-215) inclut une unité de commande esclave (234) qui est configurée de manière à communiquer avec l'unité de commande maître (233) ;
**en ce que**, lorsque la tension de la ligne de bus est faible, l'unité de commande maître (233) est configurée de manière à donner instruction à la pluralité d'unités de commande esclaves (234) de fournir de la puissance à partir d'une alimentation électrique répartie (10) qui correspond à un moyen de stockage d'énergie (12-15), de sorte que la tension de la ligne de bus est augmentée ; et
**en ce que**, lorsque la tension de la ligne de bus est élevée, l'unité de commande maître (233) est configurée de manière à donner instruction à la pluralité d'unités de commande esclaves (234) de fournir de la puissance à une alimentation électrique répartie (10), qui correspond à un moyen de stockage d'énergie (12-15), de sorte que la tension de la ligne de bus est réduite.

2. Système de conversion de puissance selon la revendication 1, dans lequel :
le moyen de stockage d'énergie est en mesure de stocker de l'énergie en utilisant la puissance en courant continu de la ligne de bus ; et
l'unité d'onduleur (22) inclut l'onduleur bidirectionnel (222) en mesure de convertir une puissance en courant alternatif obtenue à partir du système commercial (70) en une puissance en courant continu, et de fournir la puissance en courant continu à la ligne de bus.

3. Système de conversion de puissance selon la revendication 1 ou 2, dans lequel la pluralité d'alimentations électriques réparties (10) inclut le moyen de stockage d'énergie (12-15) et un moyen de création d'énergie (11).

4. Système de conversion de puissance selon l'une quelconque des revendications 1 à 3, dans lequel l'unité d'onduleur (22) inclut une pluralité de bornes de connexion d'entrée de courant continu.

5. Système de conversion de puissance selon l'une quelconque des revendications 1 à 3, dans lequel le système de conversion de puissance comprend en outre une unité de connexion en courant continu qui combine des sorties des dispositifs de conversion (211-215).

6. Système de conversion de puissance selon l'une quelconque des revendications 1 à 5, dans lequel l'unité d'onduleur (22) inclut une borne de sortie système qui fournit de la puissance en courant alternatif à un système commercial (70), et une borne de sortie autonome qui fournit de la puissance en courant alternatif à une charge domestique.

7. Système de conversion de puissance selon l'une quelconque des revendications 1 à 6, dans lequel l'unité d'onduleur (22) inclut une borne de sortie de courant continu qui utilise la puissance en courant continu de la ligne de bus pour mettre en oeuvre une sortie de courant continu.

8. Système de conversion de puissance selon la revendication 1, dans lequel chacun des dispositifs de conversion (211-215) et l'onduleur bidirectionnel (222) sont configurés de manière à commander indépendamment la tension de la ligne de bus sans utiliser une unité de commande de tension de bus qui commande la combinaison des dispositifs de conversion (211-215) et l'onduleur bidirectionnel (222).

9. Procédé de fabrication d'un système de conversion de puissance, le procédé comprenant les étapes ci-dessous consistant à :
obtenir une vérification pour une unité d'onduleur (22) qui convertit une puissance en courant continu en une puissance en courant alternatif et fournit la puissance en courant alternatif à une charge et à un système commercial (70), dans lequel la vérification est utilisée à des fins de connexion au système commercial (70) ;
connecter une unité de conversion en courant continu (21), pour une pluralité d'alimentations électriques réparties (10), à une ligne de bus, dans lequel l'unité de conversion en courant continu (21) inclut une pluralité de dispositifs de conversion (211-215), et dans lequel chacun des dispositifs de conversion (211-215) convertit une sortie d'une alimentation électrique correspondante de la pluralité d'alimentations électriques réparties (10) en une puissance en courant continu ; et
connecter l'unité d'onduleur unique (22) à la ligne de bus, de sorte que l'unité d'onduleur (22) est connectée au système commercial (70) ;
dans lequel l'unité d'onduleur (22) inclut un onduleur bidirectionnel (222) qui convertit la puissance en courant continu de la ligne de bus en une puissance en courant alternatif, et fournit la puissance en courant alternatif à au moins l'un des éléments parmi une charge et le système commercial (70) ;
dans lequel l'unité d'onduleur (22) inclut une unité de commande maître (233) qui est configurée de manière à commander l'onduleur bidirectionnel (222) ;
dans lequel chacun des dispositifs de conversion (211-215) inclut une unité de commande esclave (234) qui est configurée de manière à communiquer avec l'unité de commande maître (233) ;
dans lequel l'unité de commande maître (233) est configurée de manière à détecter la tension de la ligne de bus ;
dans lequel, lorsque la tension de la ligne de bus est faible, l'unité de commande maître (233) est configurée de manière à donner instruction à la pluralité d'unités de commande esclaves (234) de fournir de la puissance à partir d'une alimentation électrique répartie (10) qui correspond à un moyen de stockage d'énergie (12-15), de sorte que la tension de la ligne de bus est augmentée ; et
dans lequel, lorsque la tension de la ligne de bus est élevée, l'unité de commande maître (233) est configurée de manière à donner instruction à la pluralité d'unités de commande esclaves (234) de fournir de la puissance à une alimentation électrique répartie (10), qui correspond à un moyen de stockage d'énergie (12-15), de sorte que la tension de la ligne de bus est réduite.
